# FASCICULE DE BREVET EUROPEEN

(11) **EP 3 233 735 B1**
(45) Date de publication et mention de la délivrance du brevet: **10.06.2020**
(21) Numéro de dépôt: 15820080.8
(22) Date de dépôt: 16.12.2015
(51) Int. Cl.: C01F 7/14, C01F 7/34, C01F 7/44

(54) **PROCEDE DE PREPARATION DE BILLES D'ALUMINE PAR MISE EN FORME PAR EGOUTTAGE D'UN GEL TRES DISPERSIBLE**
VERFAHREN ZUR HERSTELLUNG VON ALUMINIUMKÜGELCHEN DURCH ENTWÄSSERUNG EINES HOCHDISPERGIERBAREN GELS
METHOD FOR THE PREPARATION OF ALUMINA BEADS FORMED BY DEWATERING A HIGHLY DISPERSIBLE GEL

(30) Priorité: 18.12.2014 FR 1462833
(43) Date de publication de la demande: 25.10.2017
(73) Titulaire: IFP Energies nouvelles, 92500 Rueil-Malmaison (FR)
(72) Inventeur: BOUALLEG, Malika, 69100 Villeurbanne (FR); DANDEU, Aurelie, 38540 Saint-Just Chaleyssin (FR)
(74) Mandataire: IFP Energies nouvelles
(86) Numéro de dépôt international: PCT/EP2015/079992
(87) Numéro de publication internationale: WO 2016/096985

(56) Documents cités:
- CN-A- 101 993 102
- GB-A- 967 902
- US-A- 4 727 209
- US-B1- 6 713 428
- US-B2- 7 790 652

## Description

### DOMAINE TECHNIQUE

La présente invention se rapporte à la préparation d'une alumine mésoporeuse amorphe mise en forme sous forme de billes par égouttage, à partir d'un gel d'alumine présentant une haute dispersibilité, ledit gel d'alumine étant obtenu par précipitation d'au moins un sel d'aluminium. En particulier, la présente invention se rapporte au procédé de préparation de ladite alumine par mise en forme d'un gel d'alumine, ledit gel d'alumine étant préparé selon un procédé de préparation par précipitation spécifique, permettant l'obtention d'au moins 40% poids d'alumine par rapport à la quantité totale d'alumine formée à l'issue du procédé de préparation du gel, dès la première étape de précipitation, la quantité d'alumine formée à l'issue de la première étape de précipitation pouvant même atteindre 100%.

Les billes d'alumine ainsi obtenues, peuvent être utilisées comme support de catalyseurs dans de nombreux procédés de raffinage et en particulier les procédé de raffinage opérant en lit bouillonnant. De préférence les billes d'alumine obtenues selon l'invention peuvent être utilisées comme support de catalyseur dans les procédés d'oligomérisation ou de reformage catalytique. Les billes d'alumine ainsi obtenues, peuvent également être utilisées comme adsorbant.

### ÉTAT DE LA TECHNIQUE ANTERIEURE

Le brevet US 7 790 652 décrit un nouveau support alumine présentant une distribution poreuse bien spécifique, pouvant être utilisé comme support de catalyseur dans un procédé d'hydroconversion de charges hydrocarbonées lourdes. Ledit support comprenant de l'alumine présente un diamètre moyen des pores compris entre 100 et 140 A, une distribution de taille dont la largeur est de moins de 33 Å, un volume poreux d'au moins 0,75 ml/g dans lequel moins de 5% du volume poreux dudit support est présent dans les pores ayant un diamètre supérieur à 210 Å.

Ledit support utilisé en combinaison avec une phase active hydrogénante permet d'obtenir des performances catalytiques inattendues dans le cas où il est utilisé en hydroconversion des charges lourdes ayant de préférence une majorité de ses composants bouillant à une température supérieure à 343°C. En particulier, le procédé d'hydroconversion de charges lourdes selon le brevet US 7 790 652 permet d'obtenir une conversion des composés hydrocarbonés bouillant à une température supérieure à 524°C fortement améliorée par rapport aux conversions obtenues avec des catalyseurs classiques de l'art antérieur.

Ledit support alumine est préparé selon une méthode comprenant une première étape de formation d'une dispersion d'alumine par le mélange, de manière contrôlée, d'une première solution aqueuse alcaline et d'une première solution aqueuse acide, au moins une desdites solutions acide et basiques, ou les deux comprenant un composé aluminique. Les solutions acide et basique sont mélangées dans des proportions telles que le pH de la dispersion résultante est compris entre 8 et 11. Les solutions acide et basique sont également mélangées dans des quantités permettant d'obtenir une dispersion contenant la quantité désirée d'alumine, en particulier, la première étape permet l'obtention de 25 à 35% poids d'alumine par rapport à la quantité totale d'alumine formée à l'issue des deux étapes de précipitation. La première étape opère à une température comprise entre 20 et 40°C. Quand la quantité d'alumine désirée est formée, la température de la suspension est augmentée à une température comprise entre 45 et 70°C, puis la suspension chauffée est ensuite soumise à une deuxième étape de précipitation par mise en contact de ladite suspension avec une seconde solution aqueuse alcaline et une seconde solution aqueuse acide, au moins l'une des deux solutions ou les deux comprenant un composé aluminique. De même, le pH est réglé entre 8 et 10,5 par les proportions des solutions acide et basique ajoutées et la quantité restante d'alumine à former dans la deuxième étape est apportée par les quantités des deuxièmes solutions acide et basique ajoutées. La deuxième étape opère à une température comprise entre 20 et 40°C. Le gel d'alumine ainsi formé comprend au moins 95% de boehmite. La dispersibilité du gel d'alumine ainsi obtenu n'est pas mentionnée. Le gel d'alumine est ensuite filtré, lavé et éventuellement séché selon les méthodes connues de l'homme du métier, sans étape de traitement thermique préalable, pour produire une poudre d'alumine qui est ensuite mise en forme selon les méthodes connues de l'homme du métier puis calciné pour produire le support alumine final.

La première étape de précipitation du procédé de préparation du brevet US 7 790 652 est limitée à une production d'alumine faible, comprise entre 25 et 35% poids, car une production d'alumine plus élevée à l'issue de la première étape ne permet pas une filtration optimale du gel obtenu. Par ailleurs, l'augmentation de la production d'alumine dans la première étape du brevet US 7 790 652 ne permettrait pas la mise en forme du gel ainsi obtenu.

De manière surprenante, la demanderesse a découvert qu'un gel d'alumine spécifique présentant un taux de dispersibilité élevé, préparé selon un procédé comprenant au moins une étape de précipitation dans laquelle au moins 40% poids d'alumine en équivalent Al₂O₃ par rapport à la quantité totale d'alumine formée à l'issue dudit procédé de préparation du gel, sont formés dès la première étape de précipitation, et une étape de traitement thermique finale et en particulier une étape de mûrissement finale, pouvait être mis en forme par égouttage pour obtenir des billes d'alumine mésoporeuse amorphe présentant une surface spécifique BET élevée.

En particulier, le procédé de préparation selon l'invention permet l'obtention de billes d'alumine présentant une surface spécifique BET élevée par rapport aux billes d'alumine obtenues selon les procédés classiques de l'art antérieur.

### RESUME ET INTERET DE L'INVENTION

La présente invention a pour objet un procédé de préparation d'une alumine sous forme de billes présentant une teneur en soufre comprise entre 0,001 % et 1% poids, et une teneur en sodium comprise entre 0,001 % et 1% poids, par rapport à la masse totale desdites billes, ledit procédé comprenant au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de la ou des étapes de précipitation, ladite première étape de précipitation opérant à une température comprise entre 10 et 50 °C, et pendant une durée comprise entre 2 minutes et 30 minutes,
b) une étape de traitement thermique de la suspension obtenue à l'issue de l'étape a) à une température comprise entre 50 et 200°C pendant une durée comprise entre 30 minutes et 5 heures permettant l'obtention d'un gel d'alumine,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme par égouttage de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'un flux d'air contenant jusqu'à 60% en volume d'eau.

Un avantage de l'invention est de fournir un nouveau procédé de préparation d'une alumine mésoporeuse amorphe sous forme de billes, permettant la mise en forme par égouttage d'un gel d'alumine préparé selon un procédé comprenant au moins une étape de précipitation dans laquelle au moins 40% poids d'alumine en équivalent Al₂O₃ par rapport à la quantité totale d'alumine formée à l'issue dudit procédé de préparation du gel, sont formés dès la première étape de précipitation, grâce à la mise en oeuvre d'une étape de traitement thermique et en particulier une étape de mûrissement permettant l'obtention d'un gel d'alumine présentant une filtrabilité améliorée, et facilitant sa mise en forme.
Un autre avantage de l'invention est de fournir un nouveau procédé de préparation d'une alumine par précipitation pouvant comprendre une seule étape de précipitation, peu coûteux par rapport aux procédés de préparation d'alumine classique de l'art antérieur tel que par exemple les procédés de préparation de type sol-gel.
Un autre avantage de l'invention est de fournir un nouveau procédé de préparation de l'alumine sous forme de billes moins couteux que les procédés classiques de préparation de billes d'alumine, tels que par exemple les procédés de préparation de billes d'alumine par voie alcoxyde.

Un autre avantage de l'invention est de fournir un nouveau procédé de préparation de l'alumine sous forme de billes permettant l'obtention de billes d'alumine mésoporeuse amorphe présentant une surface spécifique BET élevée par rapport aux alumines de l'art antérieur.

### Définitions et méthodes de mesure

Dans toute la suite du texte, l'indice de dispersibilité est défini comme le pourcentage en poids de gel d'alumine peptisée que l'on peut disperser par centrifugation dans un tube en polypropylène à 3600G pendant 10 min.

La dispersibilité est mesurée en dispersant 10% de boehmite ou gel d'alumine dans une suspension d'eau contenant également 10% d'acide nitrique par rapport à la masse de boehmite. Puis, on centrifuge la suspension à 3600G rpm pendant 10 min. Les sédiments recueillis sont séchés à 100°C une nuit puis pesés.

On obtient l'indice de dispersibilité, noté ID par le calcul suivant : ID(%)=100%-masse de sédiments séchés (%).

L'alumine obtenue selon la présente invention présente en outre une distribution poreuse spécifique, où les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est strictement inférieure à 2 nm.

Dans l'exposé qui suit de l'invention, la distribution poreuse mesurée par porosimétrie au mercure est déterminée par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur ».

On fixe à 0,2 MPa la valeur à partir de laquelle le mercure remplit tous les vides intergranulaires, et on considère qu'au-delà le mercure pénètre dans les pores de l'alumine. Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian des mésopores (Dp en nm) comme étant un diamètre tel que tous les pores de taille inférieure à ce diamètre constituent 50% du volume mésoporeux, mesuré par porosimétrie au mercure.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour P/P₀= 0,99, pression pour laquelle il est admis que l'azote a rempli tous les pores.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

La valeur de l'EGG est obtenue via un test normalisé (norme ASTM D4179-01) qui consiste à soumettre un matériau sous forme d'objet millimétrique, comme une bille, dans le cas de la présente invention, à une force de compression générant la rupture. Ce test est donc une mesure de la résistance en traction du matériau. L'analyse est répétée sur un certain nombre de solides pris individuellement et typiquement sur un nombre de solides compris entre 10 et 200. La moyenne des forces latérales de rupture mesurées constitue l'EGG moyen qui est exprimé dans le cas des particules sphéroïdales en unité de force (N).

### DESCRIPTION DE L'INVENTION

Conformément à l'invention, le procédé de préparation d'une alumine sous forme de billes comprend au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de la ou les étapes de précipitation, ladite première étape de précipitation opérant à une température comprise entre 10 et 50 °C, et pendant une durée comprise entre 2 minutes et 30 minutes,
b) une étape de traitement thermique de la suspension chauffée à une température comprise entre 50 et 200°C pendant une durée comprise entre 30 minutes et 5 heures permettant l'obtention d'un gel d'alumine,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme de la poudre obtenue à l'issue de l'étape d) par égouttage pour obtenir le matériau cru,
f) une étape de traitement thermique du matériau cru obtenu à l'issue de l'étape e) à une température comprise entre 500 et 1000°C, en présence ou non d'au flux d'air contenant jusqu'à 60% en volume d'eau.

De manière générale, on entend par « taux d'avancement » de la n-ième étape de précipitation le pourcentage d'alumine formé en équivalent Al₂O₃ dans ladite n-ième étape, par rapport à la quantité totale d'alumine formée à l'issue de l'ensemble des étapes de précipitation et plus généralement à l'issue des étapes de préparation du gel d'alumine.

Dans le cas où le taux d'avancement de ladite étape a) de précipitation est de 100%, ladite étape a) de précipitation permet généralement l'obtention d'une suspension d'alumine ayant une concentration en Al₂O₃ comprise entre 20 et 100 g/L, de préférence entre 20 et 80 g/L, de manière préférée entre 20 et 50 g/L.

### Etape a) de précipitation

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.
Les précurseurs basiques comprenant de l'aluminium sont l'aluminate de sodium et l'aluminate de potassium. Le précurseur basique préféré est l'aluminate de sodium.
Les précurseurs acides comprenant de l'aluminium sont le sulfate d'aluminium, le chlorure d'aluminium et le nitrate d'aluminium. Le précurseur acide préféré est le sulfate d'aluminium. De préférence, le ou les précurseur(s) basique(s) et acide(s) sont ajoutés dans ladite première étape de précipitation a) en solution aqueuse contenant le ou lesdits précurseurs. De préférence, le ou les précurseur(s) basique(s) et acide(s) sont ajoutés dans ladite première étape de précipitation a) en solutions aqueuse.

De préférence, le milieu réactionnel aqueux est de l'eau.
De préférence, ladite étape a) opère sous agitation.
De préférence, ladite étape a) est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.
Conformément à l'invention, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.
Pour les autres précurseurs basique et acide, qu'ils contiennent de l'aluminium ou pas, les ratio massiques base/acide sont établis par une courbe de neutralisation de la base par l'acide. Une telle courbe est obtenue aisément par l'homme du métier.
De préférence, ladite étape a) de précipitation est réalisée à un pH compris entre 8,5 et 10 et de manière très préférée entre 8,7 et 9,9.

Les précurseurs acide et basique sont également mélangées dans des quantités permettant d'obtenir une suspension contenant la quantité désirée d'alumine, en fonction de la concentration finale en alumine à atteindre. En particulier, ladite étape a) permet l'obtention de 40 à 100% poids d'alumine en équivalent Al₂O₃ par rapport à la quantité totale d'alumine formée à l'issue de de la ou les étapes de précipitation et plus généralement à l'issue des étapes de préparation du gel d'alumine.
Conformément à l'invention, c'est le débit du ou des précurseurs acide et basique contenant de l'aluminium qui est réglé de manière à obtenir un taux d'avancement de la première étape compris entre 40 et 100%.

De préférence, le taux d'avancement de ladite étape de précipitation a) est compris entre 40 et 99%, de préférence entre 45 et 90 % et de manière préférée entre 50 à 85%.
Dans le cas où le taux d'avancement obtenu à l'issue de l'étape a) de précipitation est inférieur à 100%, une deuxième étape de précipitation est nécessaire de manière à augmenter la quantité d'alumine formée. Dans ce cas, le taux d'avancement étant défini comme étant la proportion d'alumine formée en équivalent Al₂O₃ lors de ladite étape a) de précipitation par rapport à la quantité totale d'alumine formée à l'issue des deux étapes de précipitation du procédé de préparation selon l'invention et plus généralement à l'issue des étapes de préparation du gel d'alumine.
Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajouté dans le milieu réactionnel et du taux d'avancement requis pour la ou les étapes de précipitation.

Les débit du ou des précurseurs acide et/ou basique contenant de l'aluminium dépendent de la dimension du réacteur utilisé et ainsi de la quantité d'eau ajoutée dans le milieu réactionnel.

De préférence, ladite étape a) de précipitation est réalisée à une température comprise entre 10 et 45°C, de manière préférée entre 15 et 45 °C, de manière plus préférée entre 20 et 45°C et de manière très préférée entre 20 et 40°C.
Il est important que ladite étape a) de précipitation opère à basse température. Dans le cas où ledit procédé de préparation selon l'invention comprend deux étapes de précipitation, l'étape a) de précipitation est avantageusement réalisée à une température inférieure à la température de la deuxième étape de précipitation.

De préférence, ladite étape a) de précipitation est réalisée pendant une durée comprise entre 5 et 20 minutes, et de manière préférée de 5 à 15 minutes.

### Etape b) de traitement thermique

Conformément à l'invention, ledit procédé de préparation comprend une étape b) de traitement thermique de la suspension obtenue à l'issue de l'étape a) de précipitation, ladite étape de traitement thermique opérant à une température comprise entre 60 et 200°C pendant une durée comprise entre 30 minutes et 5 heures, pour obtenir le gel d'alumine.

De préférence, ladite étape b) de traitement thermique est une étape de mûrissement.

De préférence, ladite étape b) de traitement thermique opère à une température comprise entre 65 et 150°C, de préférence entre 65 et 130°C, de manière préférée entre 70 et 110°C, de manière très préférée entre 70 et 95°C.

De préférence, ladite étape b) de traitement thermique est mise en oeuvre pendant une durée comprise entre 40 minutes et 5 heures, de préférence entre 40 minutes et 3 heures et de manière préférée entre 45 minutes et 2 heures.

### Deuxième étape de précipitation optionnelle

Selon un mode de réalisation préféré, dans le cas où le taux d'avancement obtenu à l'issue de l'étape a) de précipitation est inférieur à 100%, ledit procédé de préparation comprend de préférence, une deuxième étape de précipitation a') après la première étape de précipitation. Ladite deuxième étape de précipitation permet d'augmenter la proportion d'alumine produite.

Ladite deuxième étape de précipitation a') est avantageusement mise en œuvre entre ladite première étape de précipitation a) et l'étape b) de traitement thermique.

Dans le cas où une deuxième étape de précipitation est mise en oeuvre, une étape de chauffage de la suspension obtenue à l'issue de l'étape a) de précipitation est avantageusement mise en œuvre entre les deux étapes de précipitation a) et a').

De préférence, ladite étape de chauffage de la suspension obtenue à l'issue de l'étape a), mise en œuvre entre ladite étape a) et la deuxième étape de précipitation a') opère à une température comprise entre 20 et 90°C, de préférence entre 30 et 80°C, de manière préférée entre 30 et 70°C et de manière très préférée entre 40 et 65°C.

De préférence, ladite étape de chauffage est mise en œuvre pendant une durée comprise entre 7 et 45 minutes et de préférence entre 7 et 35 minutes.
Ladite étape de chauffage est avantageusement mise en oeuvre selon toutes les méthodes de chauffage connues de l'homme du métier.

Selon ledit mode de réalisation préféré, ledit procédé de préparation comprend une deuxième étape de précipitation de la suspension obtenue à l'issue de l'étape de chauffage, ladite deuxième étape opérant par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 0 et 60%, le taux d'avancement étant défini comme étant la proportion d'alumine formée en équivalent Al₂O₃ lors de ladite deuxième étape de précipitation par rapport à la quantité totale d'alumine formée à l'issue des deux étapes de précipitation, plus généralement à l'issue des étapes de préparation du gel d'alumine et de préférence à l'issue de l'étape a') du procédé de préparation selon l'invention, ladite étape opérant à une température comprise entre 40 et 90 °C, et pendant une durée comprise entre 2 minutes et 50 minutes.

De même que dans la première étape de précipitation a), l'ajout dans la suspension chauffée, d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.
Les précurseurs basiques comprenant de l'aluminium sont l'aluminate de sodium et l'aluminate de potassium. Le précurseur basique préféré est l'aluminate de sodium.
Les précurseurs acides comprenant de l'aluminium sont le sulfate d'aluminium, le chlorure d'aluminium et le nitrate d'aluminium. Le précurseur acide préféré est le sulfate d'aluminium. De préférence, le ou les précurseur(s) basique(s) et acide(s) sont ajoutés dans ladite deuxième étape de précipitation a') en solutions aqueuse.
De préférence, ladite deuxième étape de précipitation opère sous agitation.
De préférence, ladite deuxième étape est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.
De même que dans l'étape a) de précipitation, c'est le débit relatif des précurseurs acide et basique qu'ils contiennent de l'aluminium ou pas, qui est choisi de manière à obtenir un pH du milieu réactionnel compris entre 8,5 et 10,5.
Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.
Pour les autres précurseurs basique et acide, qu'ils contiennent de l'aluminium ou pas, les ratio massique base/acide sont établis par une courbe de neutralisation de la base par l'acide. Une telle courbe est obtenue aisément par l'homme du métier.
De préférence, ladite deuxième étape de précipitation est réalisée à un pH compris entre 8,5 et 10 et de manière préférée entre 8,7 et 9,9.

Les précurseurs acide et basique sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 0 à 60% poids d'alumine en équivalent Al₂O₃ par rapport à la quantité totale d'alumine formée à l'issue des deux étapes de précipitation.

De même que dans l'étape a) de précipitation, c'est le débit du ou des précurseurs acide et basique contenant de l'aluminium qui est réglé de manière à obtenir un taux d'avancement de la deuxième étape compris entre 0 et 60%.

De préférence, le taux d'avancement de ladite étape de précipitation a) est compris entre 10 et 55 % et de préférence entre 15 à 55%.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a) de précipitation, les débit du ou des précurseurs acide et/ou basique contenant de l'aluminium dépendant de la dimension du réacteur utilisé et ainsi de la quantité d'eau ajoutée dans le milieu réactionnel.
A titre d'exemple, si on travaille dans un réacteur de 3 l et que l'on vise 1l de suspension d'alumine de concentration finale en Al₂O₃ de 50 g/l, le taux d'avancement ciblé est de 50% en équivalent Al₂O₃ pour la première étape de précipitation. Ainsi, 50% de l'alumine totale doit être apportée lors de l'étape a) de précipitation. Les précurseurs d'alumines sont l'aluminate de sodium à une concentration de 155 g/l en Al₂O₃ et le sulfate d'aluminium à une concentration de 102 g/l en Al₂O₃ Le pH de précipitation de la première étape est fixée à 9,5 et la deuxième à 9. La quantité d'eau ajoutée dans le réacteur est de 622 ml.
Pour la première étape a) de précipitation opérant à 30°C et pendant 8 minutes, le débit de sulfate d'aluminium doit être de 10,5 ml/min et le débit d'aluminate de sodium est de 13,2 ml/min. Le ratio massique d'aluminate de sodium sur sulfate d'aluminium est donc de 1,91. Pour la deuxième étape de précipitation, opérant à 70°C, pendant 30 minutes, le débit de sulfate d'aluminium doit être de 2,9 ml/min et le débit d'aluminate de sodium est de 3,5 ml/min. Le ratio massique d'aluminate de sodium sur sulfate d'aluminium est donc de 1,84.

De préférence, la deuxième étape de précipitation est réalisée à une température compris entre 40 et 80 °C, de manière préférée entre 45 et 70°C et de manière très préférée entre 50 et 70°C.

De préférence, la deuxième étape de précipitation est réalisée pendant une durée comprise entre 5 et 45 minutes, et de manière préférée de 7 à 40 minutes.

La deuxième étape de précipitation permet généralement l'obtention d'une suspension d'alumine ayant une concentration en Al₂O₃ comprise entre 20 et 100 g/l, de préférence entre 20 et 80 g/l, de manière préférée entre 20 et 50 g/l.

Dans le cas où ladite deuxième étape de précipitation est mise en oeuvre, ledit procédé de préparation comprend également avantageusement une deuxième étape de chauffage de la suspension obtenue à l'issue de ladite deuxième étape de précipitation à une température comprise entre 50 et 95°C et de préférence entre 60 et 90°C.
De préférence, ladite deuxième étape de chauffage est mise en œuvre pendant une durée comprise entre 7 et 45 minutes.
Ladite deuxième étape de chauffage est avantageusement mise en œuvre selon toutes les méthodes de chauffage connues de l'homme du métier.
Ladite deuxième étape de chauffage permet d'augmenter la température du milieu réactionnel avant de soumettre la suspension obtenue à l'étape b) de traitement thermique.

### Etape c) de filtration

Conformément à l'invention, le procédé de préparation d'alumine selon l'invention comprend également une étape c) de filtration de la suspension obtenue à l'issue de l'étape b) de traitement thermique, suivie d'au moins une étape de lavage du gel obtenu. Ladite étape de filtration est réalisée selon les méthodes connues de l'homme du métier.
La filtrabilité de la suspension obtenue à l'issue de l'étape a) de précipitation ou des deux étapes de précipitation est améliorée par la présence de ladite étape b) de traitement thermique finale de la suspension obtenue, ladite étape de traitement thermique favorisant la productivité du procédé de préparation ainsi qu'une extrapolation du procédé au niveau industriel.
Ladite étape de filtration est avantageusement suivie d'au moins une étape de lavage à l'eau et de préférence d'une à trois étapes de lavage, avec une quantité d'eau égale à la quantité de précipité filtré.

L'enchainement des étapes a) b) et c) et éventuellement de la deuxième étape de précipitation, de la deuxième étape de chauffage et de l'étape de filtration optionnelle, permet l'obtention d'un gel d'alumine spécifique présentant un indice de dispersibilité supérieur à 70%, une taille de cristallite comprise entre 1 à 35 nm, ainsi qu'une teneur en soufre comprise entre 0,001% et 2% poids et une teneur en sodium comprise entre 0,001% et 2 % poids, les pourcentages poids étant exprimés par rapport à la masse totale de gel d'alumine.

Le gel d'alumine ainsi obtenu, aussi appelé boehmite, présente un indice de dispersibilité compris entre 70 et 100%, de manière préférée entre 80 et 100%, de manière très préférée entre 85 et 100% et de manière encore plus préférée entre 90 et 100%.
De préférence, le gel d'alumine ainsi obtenu présente une taille de cristallites comprise entre 2 à 35 nm.
De préférence, le gel d'alumine ainsi obtenu comprend une teneur en soufre comprise entre 0,001 % et 1% poids, de manière préférée entre 0,001 et 0,40% poids, de manière très préférée entre 0,003 et 0,33 % poids, et de manière plus préférée entre 0,005 et 0,25 % poids.
De préférence, le gel d'alumine ainsi obtenu comprend une teneur en sodium comprise entre 0,001 % et 1% poids, de manière préférée entre 0,001 et 0,15 % poids, de manière très préférée entre 0,0015 et 0,10% poids, et 0,002 et 0,040 % poids.

En particulier, le gel d'alumine ou la boehmite sous forme de poudre selon l'invention est composée de cristallites dont la taille, obtenue par la formule de Scherrer en diffraction des rayons X selon les directions cristallographiques [020] et [120] sont respectivement comprise entre 2 et 20 nm et entre 2 et 35 nm.
De préférence, le gel d'alumine selon l'invention présente une taille de cristallites selon la direction cristallographique [020] comprise entre 2 à 15 nm et une taille de cristallite selon la direction cristallographique [120] comprise entre 2 à 35 nm.

La diffraction des rayons X sur les gels d'alumine ou boehmites a été effectuée en utilisant la méthode classique des poudres au moyen d'un diffractomètre.
La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the détermination of crystallite size, J. I. Langford and A. J. C. Wilson.

Le gel d'alumine ainsi préparé et présentant un taux de dispersibilité élevé permet de faciliter l'étape de mise en forme dudit gel par la technique d'égouttage dite de l'oil drop selon la terminologie anglo-saxonne.

### Etape d) de séchage

Conformément à l'invention, le gel d'alumine obtenu à l'issue de l'étape c) de filtration, est séché dans une étape d) de séchage pour obtenir une poudre.
Ladite étape de séchage est avantageusement mise en œuvre à une température comprise entre 20 et 50°C et pendant une durée comprise entre 1 jour et 3 semaines ou par atomisation.

Dans le cas où ladite étape d) de séchage est mise en œuvre à une température comprise entre 20 et 50°C et pendant une durée comprise entre 1 jour et 3 semaines, ladite étape d) de séchage peut avantageusement être réalisée en étuve fermée et ventilée, de préférence ladite étape de séchage opère à une température comprise entre 25 et 40°C, et pendant une durée comprise entre 3 jours et deux semaines.

Dans le cas où ladite étape d) de séchage est mise en œuvre par atomisation, le gâteau obtenu à l'issue de l'étape de traitement thermique éventuellement suivie d'un étape de filtration est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entrainée par le flux de chaleur jusqu'à un cyclone ou un filtre à manche qui vont séparer l'air de la poudre. De préférence, dans le cas où ladite étape d) de séchage est mise en œuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### Etape e) de mise en forme

Conformément à l'invention, la poudre obtenue à l'issue de l'étape d) de séchage est mise en forme dans une étape e) par égouttage pour obtenir un matériau cru.
On entend par matériau cru, le matériau mis en forme et n'ayant pas subi d'étapes de traitement thermique.

Ladite étape e) de mise en forme par égouttage aussi appelé méthode de la coagulation en goutte ou oil-drop selon la terminologie anglo-saxonne est mise en œuvre par toute autre méthode bien connue de l'homme du métier.
En particulier, ladite étape de mise en forme par égouttage comprend la préparation d'une suspension comprenant la poudre séchée, un agent porogène, un tensio-actif et l'eau sous agitation.
Le taux d'agent porogène, exprimé comme étant le rapport de la masse d'agent porogène sur la masse totale d'alumine exprimée en pourcentage d'Al₂O₃ engagée dans la suspension est compris entre 0,2 et 60%, de préférence entre 0,5 et 50%, de manière encore plus préférée entre 5 et 50%. L'agent porogène est un produit non totalement miscible dans l'eau, éliminable par combustion et liquide à température ambiante. Il peut être choisi parmi les graisses, les huiles et cires minérales, les corps gras, les hydrocarbures et les coupes pétrolières. Par exemple l'agent porogène est une coupe paraffinique ayant de 10 à 14 atomes de carbone, formée de normal- et d'iso-paraffines, et présentant un point d'ébullition compris entre 220 et 350°C.
Les tensio-actifs qui conviennent particulièrement bien sont les tensio-actifs non-ioniques ou les tensio-actifs ioniques, par exemple cationiques, seuls ou en mélanges. De façon préférée, les tensio-actifs non ioniques sont utilisés. La proportion de tensioactif présent dans l'émulsion, est définie comme étant égale au rapport de la masse de tensioactif sur la masse de porogène. Ce rapport est compris entre 1 et 25% en poids, de préférence entre 1 et 15% et de manière très préférée entre 3 et 10%.
La quantité d'eau dans l'émulsion représente de 5 à 20 % poids de la quantité d'eau totale correspondant au mélange (suspension de poudre séchée).
L'émulsion est avantageusement préparée à une température comprise entre 15 et 60°C, de préférence entre 20 et 40°C.

Lors de la préparation de la suspension de boehmite, il est possible d'ajouter une charge d'alumine ou de précurseur d'alumine. La quantité de charge mise en oeuvre, exprimée en % en poids d'Al₂O₃, est inférieure ou égale à 30% en poids par rapport au poids total d'équivalent Al₂O₃ de la suspension.
Éventuellement la suspension peut comprendre un sel d'un ou plusieurs éléments choisis parmi les groupes IIIA, IVA, VA et les lanthanides qui agissent comme promoteur. Ces éléments seront ainsi incorporés dans les particules sphéroïdales finales après séchage et calcination. La proportion du ou des sels métalliques est calculée pour que la teneur massique en éléments des groupes IA, IIA, IIIA, IVA, VA ou en lanthanides dans le produit final, après calcination, soit comprise entre 0,01 et 2% poids, de manière préférée entre 0,05 et 1% poids.
Le taux d'acide engagé dans la suspension est tel que le rapport de la masse dudit acide rapporté à la masse sèche de la poudre séchée et de la charge (si celle-ci est présente dans la suspension), soit compris entre 0,5 et 20 %, de préférence entre 1 et 15%. A titre d'exemple, la solution aqueuse acide est une solution d'un acide minéral fort, tel que HNO₃ ou H₂SO₄.
La proportion d'eau engagée dans la suspension, est calculée de telle sorte que le rapport de la masse sèche (correspondant à la masse de poudre de boehmite plus éventuellement la charge, exprimée en équivalent Al₂O₃) sur la masse d'eau totale de la suspension soit compris entre 10 et 50%, de préférence entre 15 et 40%.
Après mélange de la suspension, l'agitation de la solution ainsi obtenue est maintenue jusqu'à ce que la viscosité de ladite solution soit comprise entre 200 et 700 MPa.s, de préférence entre 250 et 400 MPa.s. Ainsi, la solution présente les propriétés rhéologiques adaptées pour être égouttée au travers des buses du pot d'égouttage.

Une méthode qui convient particulièrement bien pour la mise en forme est la coagulation en goutte. Cette méthode consiste à faire passer la suspension d'alumine dans un pot d'égouttage constitué de buses ayant un orifice de taille calibrée de manière à former des gouttelettes. Le pot d'égouttage est placé en tête d'une colonne contenant une phase supérieure organique et une phase inférieure constituée par une phase aqueuse basique. La phase organique est choisie d'une manière telle qu'elle présente une masse volumique légèrement inférieure à celle de l'eau.
C'est lors du passage de la gouttelette à travers la phase organique qu'a lieu la mise en forme des sphères tandis que la gélification (ou coagulation) s'effectue dans la phase aqueuse.
Des additifs de type tensioactifs ou agents de transfert de phase peuvent être ajoutés dans la phase aqueuse pour favoriser le passage de l'interface et la coagulation des particules dans la phase aqueuse basique.
La phase organique non-miscible peut avantageusement être choisie parmi les graisses, les huiles et cires minérales, les corps gras, les hydrocarbures et les coupes pétrolières. De préférence la phase organique est une coupe paraffinique ayant de 10 à 14 atomes de carbone, formée de normal- et d'iso-paraffines, et présentant un point d'ébullition compris entre 220 et 350°C.
La phase aqueuse basique est par exemple une solution d'ammoniaque, de carbonate d'ammonium, d'amines. De préférence la phase aqueuse basique est une solution d'ammoniaque.

A l'issue de l'étape de formation des particules sphéroïdales, les billes sont récupérées et séparées de la phase aqueuse sur un tamis. Il est également possible de faire subir aux particules ainsi formées une ou plusieurs étapes de murissement, comme enseigné dans la demande EP 001 023.

### Etape f) de traitement thermique

Conformément à l'invention, la matériau cru obtenu à l'issue de l'étape e) de mise en forme subit ensuite une étape f) de traitement thermique à une température comprise entre 500 et 1000°C, pendant une durée comprise entre 2 et 10 h, en présence ou non d'au flux d'air contenant jusqu'à 60% volume d'eau.

De préférence, ladite étape f) de traitement thermique opère à une température comprise entre 540°C et 850°C.
De préférence, ladite étape f) de traitement thermique opère pendant une durée comprise entre 2h et 10h.
Ladite étape f) de traitement thermique permet la transition de la boehmite vers l'alumine finale.
Le procédé de préparation de l'alumine selon l'invention permet l'obtention de billes d'alumine mésoporeuse amorphe présentant une mésoporosité contrôlée, ladite alumine présentant une bonne stabilité thermique et chimique, ayant une distribution en taille des mésopores centrée, uniforme et contrôlée, et en particulier une surface spécifique élevée par rapport aux billes d'alumine obtenues selon les procédés classiques de l'art antérieur.

Lesdites billes d'alumine comprennent avantageusement une teneur en soufre comprise entre 0,001 % et 1% poids, de manière préférée entre 0,001 et 0,40% poids, de manière très préférée entre 0,003 et 0,33 % poids, et de manière plus préférée entre 0,005 et 0,25 % poids, en poids par rapport à la masse totale desdites billes d'alumine.

Lesdites billes d'alumine comprennent également avantageusement une teneur en sodium avantageusement comprise entre 0,001 % et 1% poids, de manière préférée entre 0,001 et 0,15 % poids, de manière très préférée entre 0,0015 et 0,10% poids, et 0,002 et 0,040 % poids, en poids par rapport à la masse totale desdites billes d'alumine.

Le procédé selon l'invention permet la formation de particules sphéroïdales ou billes possédant généralement un diamètre moyen compris entre 1,2 et 3 mm, et une valeur moyenne d'écrasement grain par grain (EGG), d'au moins 2,5 daN, de préférence d'au moins 3,0 daN.

De préférence, les billes d'alumine obtenues selon la présente invention présentent avantageusement une surface spécifique supérieure à 180 m²/g, de préférence supérieur à 220 m²/g.

Les billes d'alumine obtenues selon la présente invention présentent également avantageusement une distribution poreuse spécifique.
De préférence, les billes d'alumine obtenues sont mésoporeuse et dépourvue de micropores.

Le diamètre médian des mésopores (Dp en nm) mesuré par porosimétrie au mercure desdites billes d'alumine ainsi obtenues, déterminé en volume est avantageusement compris entre 7 et 12,5 nm.

De préférence, le volume poreux total desdites billes d'alumine ainsi obtenues mesuré par porosimétrie au mercure est compris entre 0,5 et 0,85 ml/g.
De préférence, le volume des mésopores desdites billes d'alumine ainsi obtenues, mesuré par porosimétrie au mercure, est compris entre 0,5 et 0,8 ml/g, de préférence, entre 0,55 et 0,75 et de manière très préférée, entre 0,60 et 0,75 ml/g.
De préférence, le volume des macropores desdites billes d'alumine ainsi obtenues, mesuré par porosimétrie au mercure, est compris entre 0 et 0,04 ml/g, de préférence entre 0 et 0,02 ml/g.

De préférence, lesdites billes d'alumine ainsi obtenues sont non mésostructurés.

L'invention est illustrée par les exemples suivants qui ne présentent, en aucun cas, un caractère limitatif.

### Exemples :

### Exemple 1 (comparatif) : Préparation d'un support AL-1 (non-conforme) par égouttage

On réalise dans un premier temps la synthèse d'un gel d'alumine non-conforme en ce que l'exemple 1 est réalisé selon un procédé de préparation ne comprenant pas d'étape de traitement thermique de la suspension obtenue à l'issue des étapes de précipitation et en ce que la première étape de précipitation a) ne produit pas une quantité d'alumine supérieure à 40% en équivalent Al₂O₃ par rapport à la quantité totale d'alumine formée à l'issue de la deuxième étape de précipitation.
La synthèse est réalisée dans un réacteur de 7L et une suspension finale de 5L en 2 étapes de précipitation. La quantité d'eau ajoutée dans le réacteur est de 3868 ml.
La concentration finale en alumine visée est de 30g/L.

Une première étape de co-précipitation de sulfate d'aluminium Al₂(SO₄) et d'aluminate de sodium NaAlOO est réalisée à 30°C et pH=9,3 pendant une durée de 8 minutes. Les concentrations des précurseurs d'aluminium utilisées sont les suivantes : Al₂(SO₄)= à 102g/L en Al₂O₃ et NaAlOO à 155g/L en Al₂O₃. L'agitation est de 350 rpm tout au long de la synthèse.
Une solution de sulfate d'aluminium Al₂(SO₄) est ajoutée en continu pendant 8 minutes à un débit de 19,6 ml/min à une solution d'aluminate de sodium NaAlOO selon un ratio massique base/acide = 1,80 de manière à ajuster le pH à une valeur de 9,3. La température du milieu réactionnel est maintenu à 30°C.
Une suspension contenant un précipité d'alumine est obtenue.
La concentration finale en alumine visée étant de 30g/L, le débit des précurseurs sulfate d'aluminium Al₂(SO₄) et aluminate de sodium NaAlOO contenant de l'aluminium introduit dans la première étape de précipitations sont respectivement de 19,6 ml/min et de 23,3 ml/min.
Ces débits de précurseurs acide et basique contenant de l'aluminium permettent d'obtenir à l'issue de la première étape de précipitation un taux d'avancement de 30%.
La suspension obtenue est ensuite soumise à une montée en température de 30 à 57°C.

Une deuxième étape de co-précipitation de la suspension obtenue est ensuite réalisée par ajout de sulfate d'aluminium Al₂(SO₄) à une concentration de 102 g/L en Al₂O₃ et d'aluminate de sodium NaAlOO à une concentration de 155 g/L en Al₂O₃. Une solution de sulfate d'aluminium Al₂(SO₄) est donc ajoutée en continu à la suspension chauffée obtenue à l'issue de la première étape de précipitation pendant 30 minutes à un débit de 12,8 ml/min à une solution d'aluminate de sodium NaAlOO selon un ratio massique base/acide = 1,68 de manière à ajuster le pH à une valeur de 8,7. La température du milieu réactionnel dans la deuxième étape est maintenu à 57°C.
Une suspension contenant un précipité d'alumine est obtenue.
La concentration finale en alumine visée étant de 30g/L, le débit des précurseurs sulfate d'aluminium Al₂(SO₄) et aluminate de sodium NaAlOO contenant de l'aluminium introduit dans la deuxième étape de précipitations sont respectivement de 12,8 ml/min et 14,1 ml/min. Ces débits de précurseurs acide et basique contenant de l'aluminium permettent d'obtenir à l'issue de la deuxième étape de précipitation un taux d'avancement de 70%.

La suspension ainsi obtenue ne subit pas d'étape de traitement thermique.

La suspension obtenue est ensuite filtrée par déplacement d'eau sur un outil type Buchner fritté et le gel d'alumine obtenu est lavé 3 fois avec 5 L d'eau distillée à 70°C. Le temps de filtration ainsi que les lavages est de 4 h.

Les caractéristiques du gel d'alumine ainsi obtenu sont résumés dans le tableau 1.

**Tableau 1 : Caractéristiques du gel d'alumine obtenu selon l'exemple 1.**

| Indice de dispersibilité Ta=10% (%) | 60 |
|---|---|
| Taille [020] (nm) | 2,9 |
| Taille [120] (nm) | 4,1 |
| Sodium Na (ppm) | 0,011 |
| Soufre S (ppm) | 0,057 |
| Temps de filtration | 4 h |

Le gel d'alumine est ensuite séché par atomisation avec une température d'entrée de 250°C et de sortie de 130°C.
Une suspension contenant 25% de matière minérale (exprimée en % d'Al₂O₃) est préparée en mélangeant une charge d'alumine y ayant un diamètre médian en volume D50=50µm et le gel d'alumine séché dans une solution aqueuse acidifiée contenant 4% masse d'HNO₃/Al₂O₃.
La fraction solide d'Al₂O₃ est apportée à 88% poids par le gel d'alumine séché et à 14% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / alumine exprimée en % d'Al₂O₃ = 14% et fraction massique de tensioactif / porogène = 6%.
Le système est soumis à une agitation à 600 rpm jusqu'à l'obtention d'une suspension aux propriétés rhéologiques adaptées à son égouttage (viscosité 250MPa.s). Avec ce taux d'acide et le gel d'alumine ainsi préparé, la peptisation de la boehmite est insuffisante et la viscosité de la suspension n'augmente pas.
La mise en forme par égouttage du gel peu dispersible (indice de dispersibilité = 60%) ainsi préparé devient donc impossible.

### Exemple 2 : non-conforme Pural SB3

Des billes d'alumine sont préparées en utilisant une boehmite de type Pural SB3 commercialisée par Sasol dont le diagramme de diffraction des rayons X présente un rapport des tailles de cristallites selon les directions [020] et [120] obtenues par la formule de Scherrer de 0,66.
Une suspension contenant 20% de matière minérale (exprimée en % d'Al₂O₃) est préparée en mélangeant une charge d'alumine γ ayant un diamètre médian en volume D50=50µm et la poudre de boehmite Pural SB3 dans une solution aqueuse acidifiée contenant 3,6% poids d'HNO₃/Al₂O₃.
La fraction solide d'Al₂O₃ est apportée à 88% poids par la boehmite et à 14% par la charge d'alumine γ. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl, agent émulsionnant commercial. Ces composés sont introduits dans les proportions suivantes : fraction massique de porogène / alumine exprimée en % d'Al₂O₃ = 14% et fraction massique de tensioactif / porogène = 6%. Le système est soumis à une agitation à 600 rpm jusqu'à l'obtention d'une suspension aux propriétés rhéologiques adaptées à son égouttage (viscosité 250MPa.s).

La colonne d'égouttage est chargée avec une solution ammoniacale à une concentration de 28g/L et une solution organique constituée par la même coupe pétrolière que celle utilisée comme agent porogène dans la préparation de l'émulsion (phase organique en couche supérieure). La suspension est égouttée par l'intermédiaire de buses calibrées. Les billes sont récupérées en fond de colonne et placées dans une étuve ventilée à 120°C sous air humide contenant 200g d'eau / kg air sec pendant 12h. Elles sont ensuite calcinées sous air sec à 650°C pendant 3 heures. Les billes obtenues ont une sphéricité déterminée par le diamètre mesurée par le test d'Ecrasement Grain à Grain et par imagerie de 0.88. Les billes obtenues ont un diamètre moyen déterminé par le test d'Ecrasement Grain à grain de 1,9 mm.

**Tableau 2 : Caractéristiques des billes d'alumines obtenues selon l'exemple 2.**

| | Pural SB3 |
|---|---|
| S_{BET}(m²/g) | 200 |
| VPT (Hg) (ml/g) | 0,68 |
| Vmacro (50-7000nm) (Hg) (ml/g) | 0,01 |
| V_{méso} (Hg) (ml/g) | 0,65 |
| Sodium Na (ppm) | 0 |
| Soufre S (ppm) | 0 |

### Exemple 3 (selon l'invention) : Préparation des supports AL-3 et AL-4 (conformes)

On réalise dans un premier temps la synthèse de deux supports alumines AL-3 et AL-4 selon un procédé de préparation conforme à l'invention dans un réacteur de 7L et une suspension finale de 5L en 3 étapes, deux étapes de précipitation suivie d'une étape de murissement.
La concentration finale en alumine visée est de 45g/L. La quantité d'eau ajoutée dans le réacteur est de 3267 ml. L'agitation est de 350 rpm tout au long de la synthèse.
Une première étape de co-précipitation dans de l'eau, de sulfate d'aluminium Al₂(SO₄) et d'aluminate de sodium NaAlOO est réalisée à 30°C et pH=9,5 pendant une durée de 8 minutes. Les concentrations des précurseurs d'aluminium utilisées sont les suivantes : Al₂(SO₄)= à 102g/L en Al₂O₃ et NaAlOO à 155g/L en Al₂O₃.
Une solution de sulfate d'aluminium Al₂(SO₄) est ajoutée en continu pendant 8 minutes à un débit de 69,6 ml/min à une solution d'aluminate de sodium NaAlOO à un débit de 84,5 ml/min selon un ratio massique base/acide = 1,84 de manière à ajuster le pH à une valeur de 9,5. La température du milieu réactionnel est maintenu à 30°C.
Une suspension contenant un précipité d'alumine est obtenue.
La concentration finale en alumine visée étant de 45g/L, le débit des précurseurs sulfate d'aluminium Al₂(SO₄) et aluminate de sodium NaAlOO contenant de l'aluminium introduit dans la première étape de précipitations sont respectivement de 69,6 ml/min et 84,5 ml/min. Ces débits de précurseurs acide et basique contenant de l'aluminium permettent d'obtenir à l'issue de la première étape de précipitation un taux d'avancement de 72%.
La suspension obtenue est ensuite soumise à une montée en température de 30 à 68°C.

Une deuxième étape de co-précipitation de la suspension obtenue est ensuite réalisée par ajout de sulfate d'aluminium Al₂(SO₄) à une concentration de 102g/L en Al₂O₃ et d'aluminate de sodium NaAlOO à une concentration de 155g/L en Al₂O₃. Une solution de sulfate d'aluminium Al₂(SO₄) est donc ajoutée en continu à la suspension chauffée obtenue à l'issue de la première étape de précipitation pendant 30 minutes à un débit de 7,2 ml/min à une solution d'aluminate de sodium NaAlOO selon un ratio massique base/acide = 1,86 de manière à ajuster le pH à une valeur de 9. La température du milieu réactionnel dans la deuxième étape est maintenu à 68°C.
Une suspension contenant un précipité d'alumine est obtenue.
La concentration finale en alumine visée étant de 45g/L, le débit des précurseurs sulfate d'aluminium Al₂(SO₄) et aluminate de sodium NaAlOO contenant de l'aluminium introduit dans la deuxième étape de précipitations sont respectivement de 7,2 ml/min et de 8,8 ml/min.
Ces débits de précurseurs acide et basique contenant de l'aluminium permettent d'obtenir à l'issue de la deuxième étape de précipitation un taux d'avancement de 28%.

La suspension obtenue est ensuite soumise à une montée en température de 68 à 90°C.

La suspension subit ensuite une étape de traitement thermique dans laquelle elle est maintenue à 90°C pendant 60 minutes.
La suspension obtenue est ensuite filtrée par déplacement d'eau sur un outil type Buchner fritté et le gel d'alumine obtenu est lavé 3 fois avec 5 L d'eau distillée. Le temps de filtration ainsi que les lavages est de 3h.
Les caractéristiques du gel d'alumine ainsi obtenu sont résumés dans le tableau 3.

**Tableau 3 : Caractéristiques du gel d'alumine obtenu selon l'exemple 3.**

| Indice de dispersibilité Ta=10% (%) | 100 |
|---|---|
| Taille [020] (nm) | 2,8 |
| Taille [120] (nm) | 3,5 |
| Sodium Na (%) | 0,074 |
| Soufre S (%) | 0,850 |
| Temps de filtration | 3h |

Un gel présentant un indice de dispersibilité de 100% est ainsi obtenu.

Le gel d'alumine obtenu est ensuite séché par atomisation avec une température d'entrée de 250°C et de sortie de 130°C. Le gel séché par atomisation est appelé Gel n°1.
Le gel d'alumine obtenu selon l'exemple 2 a également été séché dans une étude ventilée à 35°C pendant 4 jours. Le gel séché en étuve est appelé Gel n°2.

Deux suspensions contenant 25% de matière minérale (exprimée en % d'Al₂O₃) sont préparées en mélangeant une charge d'alumine y ayant un diamètre médian en volume D50=50µm et respectivement les gels d'alumine 1 et 2 obtenus dans une solution aqueuse acidifiée contenant 4% masse d'HNO₃/Al₂O₃.
La fraction solide d'Al₂O₃ est apportée à 88% poids par respectivement les gels d'alumine 1 et 2 et à 14% par la charge d'alumine y. Cette suspension contient, en outre, un agent porogène et un tensioactif. L'agent porogène est une phase organique comprenant un mélange de paraffines contenant entre 10 et 12 atomes de carbone dont la température d'ébullition est d'environ 290°C et de densité 0,75 g/cm³. Le tensioactif est du Galoryl. Ces composés sont introduits dans les proportions suivantes : fraction massique de porogène / alumine exprimée en % d'Al₂O₃ = 14% et fraction massique de tensioactif / porogène = 6%. Le système est soumis à une agitation à 600 rpm jusqu'à l'obtention d'une suspension aux propriétés rhéologiques adaptées à son égouttage (viscosité 250MPa.s).
La mise en forme par coagulation en goutte est réalisée. La colonne d'égouttage est chargée avec une solution ammoniacale à une concentration de 28g/L et une solution organique constituée par la même coupe pétrolière que celle utilisée comme agent porogène dans la préparation de l'émulsion (phase organique en couche supérieure). La suspension est égouttée par l'intermédiaire de buses calibrées. Les billes sont récupérées en fond de colonne et placées dans une étuve ventilée à 120°C sous air humide contenant 200g d'eau / kg air sec pendant 12h. Elles sont ensuite calcinées sous air sec à 600°C pendant 3 heures.
Les billes obtenues ont une sphéricité déterminée par le diamètre mesurée par le test d'Ecrasement Grain à Grain et par imagerie de 0,92.
Elles ont un diamètre moyen déterminé par le test d'Ecrasement Grain à grain de 1,80 mm.

Les caractéristiques des billes d'alumines AL-3 et AL-4 formées sont reportées dans le tableau 4 :

**Tableau 4 : Caractéristiques des billes d'alumines AL-3 et AL-4 obtenues selon l'exemple 3.**

| | AL-3 | AL-4 |
|---|---|---|
| Type de séchage | Atomisation | 35°C |
| S_{BET}(m²/g) | 280 | 281 |
| VPT (Hg) (ml/g) | 0,61 | 0,60 |
| Vmacro (Hg) (ml/g) | 0,01 | 0,01 |
| Vméso (Hg) (ml/g) | 0,60 | 0,59 |
| Dp à Vméso/2 (nm)(Hg) | 7,2 | 7,1 |
| Sodium Na (%) | 0,074 | 0,075 |
| Soufre S (%) | 0,850 | 0,84 |

Le procédé de préparation selon l'invention permet donc la mise en forme d'un gel d'alumine très dispersible par égouttage, le procédé permettant l'obtention de billes d'alumine présentant une surface spécifique très élevée par rapport aux billes d'alumines obtenues avec les procédés de l'art antérieur et en particulier par rapport à des billes d'alumines obtenues à partir de Pural SB3 (exemple 2).

## Revendications

1. Procédé de préparation d'une alumine sous forme de billes présentant une teneur en soufre comprise entre 0,001 % et 1% poids, et une teneur en sodium comprise entre 0,001 % et 1% poids, par rapport à la masse totale desdites billes, ledit procédé comprenant au moins les étapes suivantes :
a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de la ou des étapes de précipitation, ladite première étape de précipitation opérant à une température comprise entre 10 et 50 °C, et pendant une durée comprise entre 2 minutes et 30 minutes,
b) une étape de traitement thermique de la suspension obtenue à l'issue de l'étape a) à une température comprise entre 50 et 200°C pendant une durée comprise entre 30 minutes et 5 heures permettant l'obtention d'un gel d'alumine,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme par égouttage de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'un flux d'air contenant jusqu'à 60% en volume d'eau.

2. Procédé selon la revendication 1 dans lequel le précurseur basique est l'aluminate de sodium.

3. Procédé selon l'une des revendications 1 ou 2 dans lequel le précurseur acide est le sulfate d'aluminium.

4. Procédé selon l'une des revendications 1 à 3 dans lequel le taux d'avancement de ladite étape de précipitation a) est compris entre 45 et 90 %.

5. Procédé selon l'une des revendications 1 à 4 dans lequel dans le cas où le taux d'avancement obtenu à l'issue de la première étape a) de précipitation est inférieur à 100%, ledit procédé de préparation comprend une deuxième étape de précipitation a') après la première étape de précipitation.

6. Procédé selon la revendication 5 dans lequel une étape de chauffage de la suspension obtenue à l'issue de l'étape a) de précipitation est mise en œuvre entre les deux étapes de précipitation a) et a'), ladite étape de chauffage opérant à une température comprise entre 20 et 90°C et pendant une durée comprise entre 7 et 45 minutes

7. Procédé selon l'une des revendications 5 ou 6 dans lequel ladite deuxième étape de précipitation a') de la suspension obtenue à l'issue de l'étape de chauffage, opère par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 0 et 60%, ledit taux d'avancement de la deuxième étape étant défini comme étant la proportion d'alumine formée en équivalent Al₂O₃ lors de ladite deuxième étape de précipitation a') par rapport à la quantité totale d'alumine formée à l'issue de l'étape a') du procédé de préparation, ladite deuxième étape a') opérant à une température comprise entre 40 et 90 °C, et pendant une durée comprise entre 2 minutes et 50 minutes.

8. Procédé selon l'une des revendications 1 à 7 dans lequel ladite étape e) de mise en forme par égouttage comprend la préparation d'une suspension comprenant la poudre séchée, un agent porogène choisi parmi les graisses, les huiles et cires minérales, les corps gras, les hydrocarbures et les coupes pétrolières, un tensio-actif choisi parmi les tensio-actifs non-ioniques ou les tensio-actifs ioniques et l'eau, sous agitation.

9. Procédé selon la revendication 8 dans lequel le taux d'agent porogène, exprimé comme étant le rapport de la masse d'agent porogène sur la masse totale d'alumine exprimée en pourcentage d'Al₂O₃ engagée dans la suspension est compris entre 0,2 et 60%.

10. Procédé selon l'une des revendications 8 ou 9 dans lequel la proportion de tensioactif présent dans l'émulsion, définie comme étant égale au rapport de la masse de tensioactif sur la masse de porogène est compris entre 1 et 25% en poids.

11. Procédé selon l'une des revendications 8 à 10 dans lequel lors de la préparation de la suspension comprenant la poudre séchée, une charge d'alumine ou de précurseur d'alumine est ajoutée à une quantité de charge, exprimée en % en poids d'Al₂O₃, inférieure ou égale à 30% en poids par rapport au poids total d'équivalent Al₂O₃ de la suspension.

## Patentansprüche

1. Verfahren zur Herstellung eines Aluminiumoxids in Form von Kugeln, die einen Schwefelgehalt zwischen 0,001 Gewichts-% und 1 Gewichts-% und einen Natriumgehalt zwischen 0,001 Gewichts-% und 1 Gewichts-% bezogen auf das Gesamtgewicht der Kugeln aufweisen, wobei das Verfahren zumindest folgende Schritte umfasst:
a) mindestens einen ersten Schritt zur Ausfällung von Aluminiumoxid, in einem wässrigen Reaktionsmedium, aus mindestens einem basischen Präkursor, der ausgewählt ist aus Natriumaluminat, Kaliumaluminat, Ammoniaklösung, Natriumhydroxid und Kaliumhydroxid, und aus mindestens einem sauren Präkursor, der ausgewählt ist aus Aluminiumsulfat, Aluminiumchlorid, Aluminiumnitrat, Schwefelsäure, Chlorwasserstoffsäure und Salpetersäure, wobei mindestens einer der basischen oder sauren Präkursoren Aluminium umfasst, der relative Durchfluss der sauren und basischen Präkursoren derart gewählt ist, dass ein pH-Wert des Reaktionsmediums zwischen 8,5 und 10,5 erhalten wird und der Durchfluss des sauren und basischen Präkursors oder der sauren und basischen Präkursoren, der bzw. die Aluminium enthält bzw. enthalten, derart geregelt wird, dass ein Umsatzfortschritt im ersten Schritt zwischen 40 und 100% erreicht wird, wobei der Umsatzfortschritt als der Anteil Aluminiumoxid als Al₂O₃-Aquivalent definiert ist, der während des ersten Ausfällungsschritts gebildet wird, bezogen auf die Gesamtmenge Aluminiumoxid, die am Ende des oder der Ausfällungsschritte gebildet wird, wobei der erste Ausfällungsschritt bei einer Temperatur zwischen 10 und 50 °C und während einer Dauer zwischen 2 Minuten und 30 Minuten erfolgt,
b) einen Schritt zur Wärmebehandlung der am Ende von Schritt a) erhaltenen Suspension bei einer Temperatur zwischen 50 und 200°C während einer Dauer zwischen 30 Minuten und 5 Stunden, wodurch sich ein Aluminiumoxidgel erhalten lässt,
c) einen Schritt zur Filtration der am Ende von Schritt b) zur Wärmebehandlung erhaltenen Suspension, woran sich mindestens ein Schritt zum Waschen des erhaltenen Gels anschließt,
d) einen Schritt zum Trocknen des am Ende von Schritt c) erhaltenen Aluminiumoxidgels zum Erhalten eines Pulvers,
e) einen Schritt zur Formgebung des am Ende von Schritt d) erhaltenen Pulvers mittels Vertropfung zum Erhalten des ungesinterten Materials,
f) einen Schritt zur Wärmebehandlung des am Ende von Schritt e) erhaltenen ungesinterten Materials bei einer Temperatur zwischen 500 und 1000°C in Gegenwart oder Abwesenheit eines Luftstroms, der bis zu 60 Volumen-% Wasser enthält.

2. Verfahren nach Anspruch 1, wobei der basische Präkursor Natriumaluminat ist.

3. Verfahren nach Anspruch 1 oder 2, wobei der saure Präkursor Aluminiumsulfat ist.

4. Verfahren nach einem der Ansprüche 1 bis 3, wobei der Umsatzfortschritt des Ausfällungsschritts a) zwischen 45 und 90 % beträgt.

5. Verfahren nach einem der Ansprüche 1 bis 4, wobei das Herstellungsverfahren einen zweiten Ausfällungsschritt a') nach dem ersten Ausfällungsschritt umfasst, wenn der am Ende des ersten Ausfällungsschritts a) erhaltene Umsatzfortschritt unter 100% liegt.

6. Verfahren nach Anspruch 5, wobei ein Schritt zum Erwärmen der am Ende von Ausfällungsschritt a) erhaltenen Suspension zwischen den beiden Ausfällungsschritten a) und a') durchgeführt wird, wobei der Schritt zum Erwärmen bei einer Temperatur zwischen 20 und 90°C und während einer Dauer zwischen 7 und 45 Minuten erfolgt.

7. Verfahren nach Anspruch 5 oder 6, wobei der zweite Ausfällungsschritt a') an der am Ende des Erwärmungsschritts erhaltenen Suspension durch Zugabe von mindestens einem basischen Präkursor, der ausgewählt ist aus Natriumaluminat, Kaliumaluminat, Ammoniaklösung, Natriumhydroxid und Kaliumhydroxid, und von mindestens einem sauren Präkursor, der ausgewählt ist aus Aluminiumsulfat, Aluminiumchlorid, Aluminiumnitrat, Schwefelsäure, Chlorwasserstoffsäure und Salpetersäure, in die Suspension erfolgt, wobei mindestens einer der basischen oder sauren Präkursoren Aluminium umfasst, der relative Durchfluss der sauren und basischen Präkursoren derart gewählt ist, dass ein pH-Wert des Reaktionsmediums zwischen 8,5 und 10,5 erhalten wird und der Durchfluss des sauren und basischen Präkursors oder der sauren und basischen Präkursoren, der bzw. die Aluminium enthält bzw. enthalten, derart geregelt wird, dass ein Umsatzfortschritt im zweiten Schritt zwischen 0 und 60% erreicht wird, wobei der Umsatzfortschritt des zweiten Schritts als der Anteil Aluminiumoxid als Al₂O₃-Äquivalent definiert ist, der während des zweiten Ausfällungsschritts a') gebildet wird, bezogen auf die Gesamtmenge Aluminiumoxid, die am Ende von Schritt a') des Herstellungsverfahrens gebildet wird, wobei der zweite Schritt a') bei einer Temperatur zwischen 40 und 90 °C und während einer Dauer zwischen 2 Minuten und 50 Minuten erfolgt.

8. Verfahren nach einem der Ansprüche 1 bis 7, wobei Schritt e) zur Formgebung mittels Vertropfung die Herstellung einer Suspension, die das getrocknete Pulver, einen Porenbildner, der aus Mineralfetten, - ölen und -wachsen, Fettstoffen, Kohlenwasserstoffen und Erdölfraktionen ausgewählt ist, einen grenzflächenaktiven Stoff, der aus nichtionischen grenzflächenaktiven Stoffen oder ionischen grenzflächenaktiven Stoffen ausgewählt ist, und Wasser umfasst, unter Rühren umfasst.

9. Verfahren nach Anspruch 8, wobei der Anteil an Porenbildner, ausgedrückt als Verhältniswert des Gewichts des Porenbildners zum Gesamtgewicht Aluminiumoxid, ausgedrückt als prozentualer Anteil von Al₂O₃, in der Suspension zwischen 0,2 und 60% liegt.

10. Verfahren nach Anspruch 8 oder 9, wobei der Anteil an grenzflächenaktivem Stoff in der Emulsion, der so definiert ist, dass er dem Verhältnis des Gewichts an grenzflächenaktivem Stoff zum Gewicht an Porenbildner entspricht, zwischen 1 und 25 Gewichts-% beträgt.

11. Verfahren nach einem der Ansprüche 8 bis 10, wobei bei der Herstellung der das getrocknete Pulver umfassenden Suspension ein Aluminiumoxid-Einsatzmaterial oder ein Aluminiumoxid-Präkursor-Einsatzmaterial in einer Einsatzmaterialmenge, ausgedrückt in Gewichts-% von Al₂O₃, von kleiner gleich 30 Gewichts-% bezogen auf das Gesamtgewicht an Al₂O₃-Äquivalent der Suspension zugegeben wird.

## Claims

1. A process for the preparation of an alumina in the form of beads with a sulphur content of between 0.001% and 1% by weight and a sodium content of between 0.001% and 1% by weight with respect to the total mass of said beads, said process comprising at least the following steps:
a) at least one first step for the precipitation of alumina, in an aqueous reaction medium, using at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid and nitric acid, in which at least one of the basic or acidic precursors comprises aluminium, the relative flow rate of the acidic and basic precursors being selected in a manner such as to obtain a pH of the reaction medium of between 8.5 and 10.5 and the flow rate of the acidic and basic precursor or precursors containing aluminium being regulated in a manner such as to obtain a percentage completion of said first step of between 40% and 100%, the percentage completion being defined as being the proportion of alumina formed in equivalents of Al₂O₃ during said first precipitation step with respect to the total quantity of alumina formed at the end of the precipitation step or steps, said first precipitation step being operated at a temperature of between 10°C and 50°C, and for a period of between 2 minutes and 30 minutes;
b) a step for heat treatment of the suspension obtained at the end of step a) at a temperature of between 50°C and 200°C for a period of between 30 minutes and 5 hours in order to obtain an alumina gel;
c) a step for filtration of the suspension obtained at the end of the heat treatment step b) followed by at least one step for washing the gel obtained;
d) a step for drying the alumina gel obtained at the end of step c) in order to obtain a powder;
e) a step for shaping the powder obtained at the end of step d) by drop coagulation in order to obtain the crude material;
f) a step for heat treatment of the crude material obtained at the end of step e) at a temperature of between 500°C and 1000°C, in the presence or absence of a stream of air containing up to 60% by volume of water.

2. The process according to claim 1, in which the basic precursor is sodium aluminate.

3. The process according to claim 1 or claim 2, in which the acidic precursor is aluminium sulphate.

4. The process according to one of claims 1 to 3, in which the percentage completion of said precipitation step a) is between 45% and 90%.

5. The process according to one of claims 1 to 4, in which in the case in which the percentage completion obtained at the end of the first precipitation step a) is less than 100%, said preparation process comprises a second precipitation step a') after the first precipitation step.

6. The process according to claim 5, in which a step for heating the suspension obtained at the end of the precipitation step a) is carried out between the two precipitation steps a) and a'), said heating step being operated at a temperature of between 20°C and 90°C for a period of between 7 and 45 minutes.

7. The process according to claim 5 or claim 6, in which said second step a') for precipitation of the suspension obtained at the end of the heating step is operated by adding to said suspension at least one basic precursor selected from sodium aluminate, potassium aluminate, ammonia, sodium hydroxide and potassium hydroxide and at least one acidic precursor selected from aluminium sulphate, aluminium chloride, aluminium nitrate, sulphuric acid, hydrochloric acid and nitric acid, in which at least one of the basic or acidic precursors comprises aluminium, the relative flow rate of the acidic and basic precursors being selected in a manner such as to obtain a pH of the reaction medium of between 8.5 and 10.5 and the flow rate of the acidic and basic precursor or precursors containing aluminium being regulated in a manner such as to obtain a percentage completion of the second step of between 0 and 60%, said percentage completion of the second step being defined as being the proportion of alumina formed in Al₂O₃ equivalents during said second precipitation step a') with respect to the total quantity of alumina formed at the end of step a') of the preparation process, said second step a') being operated at a temperature of between 40°C and 90°C, and for a period of between 2 minutes and 50 minutes.

8. The process according to one of claims 1 to 7, in which said step e) for shaping by drop coagulation comprises preparing a suspension comprising the dried powder, a pore-forming agent selected from greases, oils and mineral waxes, fats, hydrocarbons and oil cuts, a surfactant selected from non-ionic surfactants or ionic surfactants and water, with stirring.

9. The process according to claim 8, in which the quantity of pore-forming agent, expressed as the ratio of the mass of pore-forming agent to the total mass of alumina expressed as the percentage of Al₂O₃ engaged in the suspension, is between 0.2% and 60%.

10. The process according to claim 8 or claim 9, in which the proportion of surfactant present in the emulsion, defined as being equal to the ratio of the mass of surfactant to the mass of pore-forming agent, is between 1% and 25% by weight.

11. The process according to one of claims 8 to 10 in which, during the preparation of the suspension comprising the dried powder, a charge of alumina or of alumina precursor is added to a quantity of charge, expressed as the % by weight of Al₂O₃, of less than or equal to 30% by weight with respect to the total weight of the suspension in equivalents of Al₂O₃.
